Europäisches Patentamt

European Patent Office

Office européen des brevets

(11) Veröffentlichungsnummer: **0 237 517**
**A2**

## (12) EUROPÄISCHE PATENTANMELDUNG

(21) Anmeldenummer: **87890026.5**

(22) Anmeldetag: **11.02.87**

(51) Int. Cl.4: **A 23 G 9/00**

(30) Priorität: **11.02.86 AT 342/86**

(43) Veröffentlichungstag der Anmeldung:
**16.09.87 Patentblatt 87/38**

(84) Benannte Vertragsstaaten: **DE ES FR GR IT**

(71) Anmelder: **MASCHINENFABRIK HEID
AKTIENGESELLSCHAFT
Ernstbrunner Strasse 31-33
A-2000 Stockerau (AT)**

(72) Erfinder: **Messner, Erich, Ing.
Davidgasse 77/4/14
A-1100 Wien (AT)**

**Karabece, Saltuk, Dipl.-Ing.
Gonzagagasse 11/24
A-1010 Wien (AT)**

(74) Vertreter: **Müllner, Erwin, Dr. et al
Patentanwalt Weihburggasse 9
A-1010 Wien (AT)**

(54) Saatmaistrocknungsanlage.

(57) Eine Saatmaistrocknungsanlage umfaßt Kammern (3 bis 8, 9 bis 14), die um eine vertikale Achse (1, 2), insbesondere einen vertikalen Schacht (15, 16) herum angeordnet sind und die jeweils Entleerungsklappen (27 bis 32, 33 bis 38) aufweisen, welche eine zentrale Entleerung über einen Auffangtrichter (39) zur Weiterverarbeitung des getrockneten Gutes in einer unter den Kammern (3 bis 8, 9 bis 14) liegenden Manipulationshalle (40) ermöglichen. Oberhalb und unterhalb der Kammern (3 bis 8, 9 bis 14) sind Luftführungskanäle (20, 20a, 21, 22) in Ringform vorgesehen. Ein Klappen- und Schiebersystem ermöglicht die Reihen- und bzw. oder Parallelschaltung der Kammern (3 bis 8, 9 bis 14) bezüglich ihrer Belüftung und Entlüftung. Der Boden der Kammern ( 3 bis 8, 9 bis 14) ist luftdurchlässig. Im Schacht (15, 16) ist über dem Auffangtrichter (39) eine Arbeitsbühne (41, 44) eingebaut, welche die Bedienung und Überwachung der Entleerungsklappen (27 bis 32, 33 bis 38) ermöglicht. Eine Umluftkammer (20a) mit Wärmerückgewinnungsmöglichkeit, gegebenenfalls unter Verwendung von Wärmepumpen schließt den Schacht (15, 16) nach oben ab. Sind mehrere Gruppen von Kammern um mehrere Achsen herum vorgesehen, dann wird die Versorgungseinheit (Heizung 45, Lüftung 46, Schacht 47, 48) zwischen den Achsen (1, 2) angeordnet.

**Beschreibung**

Saatmaistrocknungsanlage

Die Erfindung betriffen eine Saatmaistrocknungsanlage mit mehreren Kammern, deren Böden luftdurchlässig und beispielsweise als Siebböden ausgebildet sind, zur Aufnahme von Maiskolben, mit einer Heiz- und Lüftungseinrichtung und mit Luftführungskanälen zur Reihen- und bzw. oder Parallelschaltung der Kammern hinsichtlich ihrer Belüftung und Entlüftung.

Saatmaistrocknungsanlagen dieser Art wurden bisher ausschließlich in Reihenbauweise mit längs einer Geraden nebeneinander angeordneten Trocknungskammern ausgeführt. Ein Heizhaus war den Kammern vorgeschaltet und Luftführungskanäle über die gesamte Länge des Bauwerkes sorgten für die Verteilung der Warmluft und des Zusammenschaltens der Kammern zu Trocknungsbatterien. Unterhalb der Kammern war ein Förderband vorgesehen, das so wie das Beschickungsband oberhalb der Kammern eine der Gesamtlänge der An lage entsprechende Baulänge hatte. Schließlich war meist an dem, dem Heizhaus gegenüberliegenden Ende eine Halle zur weiteren Verarbeitung der getrockneten Maiskolben vorgesehen. Dort erfolgte das Entlischen, Selektieren und Rebeln der Maiskolben mit den bekannten Maschinen und Fördereinrichtunger. Ferner war in der Halle die zentrale Steuerung für die Luftführung und Bedienung der Klappen und Schieber sowie der Heizung und Lüftung vorgesehen.

Diese Bauart, die den Zweck, nämlich die Trocknung und Verarbeitung von Maiskolben zu lagerfähigem Saatmais sehr gut erfüllt, hat dennoch einige Nachteile. So müssen bei der Bedienung und Wartung der Anlage große Leerwege in Kauf genommen werden. Lange Förderbänder und weit auseinanderliegende Steuer- und Überwachungsgeräte waren erforderlich. Der Wärmeverlust durch die langen Luftführungskanäle mußte durch höhere Energiezufuhr ebenso kompensiert werden, wie die Wärmeabfuhr durch die frei liegenden Außenwände der einzelnen Kammern. Schließlich konnten derartige Anlagen nur dort errichtet werden, wo ein entsprechend großes Areal zur Verfügung stand.

Die Erfindung zielt darauf ab, eine Saatmaistrocknungsanlage der eingangs beschriebenen Art zu verbessern und insbesondere in den oben als nachteilig angeführten Punkten zu optimieren. Dies wird dadurch erreicht, daß die Kammern um mindestens eine vertikale Achse herum angeordnet sind und jeweils nächst der Achse eine Entleerungsklappe zur Entleerung der Kammern ins Zentrum aufweisen, daß im Bereich der Entleerungsklappen ein Auffangtrichter vorgesehen ist, der in einer unterhalb der Kammern angeordneten Manipulationshalle für die Weiterbearbeitung des getrockneten Gutes ausmündet und daß die Luftführungskanäle, insbesondere die Zubzw. Umluft-sowie Fortluftkanäle als Ringkanäle oberhalb und unterhalb der Kammern ausgebildet sind. Insbesondere ist es zweckmäßig, wenn die Achse das Zentrum eines Schahtes bildet, an den die Kammern ringsum anschließen, wenn die Entleerungsklappen in den Schacht einmünden und wenn der Auffangtrichter am unteren Ende des Schachtes angeordnet ist. Die einzelnen Kammern haben einen Querschnitt etwa gemäß einem Kreissegment bzw. einen Kreisringsegment. Es werden bei üblichen Baugrößen sechse Kammern ringförmig nebeneinander angeordnet. Dadurch ergibt sich ein etwa zylindrischer oder polygoner Baukörper gegebenenfalls mit einem zentralen Schacht, in welchem sämtliche Kammern einmünden. Lediglich die Außenwände sollten thermisch isoliert werden, um Wärmeverluste an der gegenüber bekannten Ausführungen wesentlich kleineren Außenfläche zu reduzieren. Der Baukörper kann auch quaderförmig ausgebildet sein. Die Bedienung der Anlage durch Konzentration der Klappen und Schieber im Nahbereich der Achse, insbesondere des vertikalen Schachtes bzw. bezüglich der Entleerungsklappen der Kammern im Zentrum, insbesondere im Inneren des Schachtes selbst,wird wesentlich vereinfacht. Die Länge der Luftführungskanäle wird durch diese Bauweise auf ein Minimum reduziert. Die Wärme wird im Inneren des Baukörpers gehalten, sodaß eine Überdimensionierung der Heizung und der Lüftung zur Deckung der Verluste unterbleiben kann. Ein wesentlicher Vorteil liegt ferner darin, daß ein Förderband auf der Entnahmeseite der Kammern gänzlich entfallen kann, weil sämtliche Kammern in den zentralen Auffangtrichter im Zentrum entleert werden. Die Verarbeitung der getrockneten Maiskolben kann in der Manipulationshalle unmittelbar unterhalb der Schüttöffnung beginnen. Je nach Bedarf können auch zwei oder mehr der gekammerten Türme nebeneinander angeordnet werden. Dabei werden die gemeinsamen Aggregate in zweckmäßiger Weise so zwischen den Türmen eingebaut, daß sich minimale Kanallängen bzw. Wege ergeben. Besonders vorteilhaft ist es, wenn im Inneren des vertikalen Schächtes eine Arbeitsbühne vorgesehen und über einen radialen Korridor zwischen den Kammern zugänglich ist. Im Gegensatz zu dem bisher erforderlichen langen Gang neben den linear aneinandergereihten Kammern, können von der Arbeitsbühne im Schacht die ringsum liegenden Entleerungsklappen der erfindungsgemäß angeordneten Kammern mühelos erreicht und bedient werden. Auch ist dadurch eine Überwachung des Entleerungsvorganges unmittelbar im Bereich der Entleerungsklappen möglich. Für die Luftführung kann ferner der Schacht an seinem oberen Ende durch eine im Schacht liegende Umluftkammer abgeschlossen sein. Ein Wärmetauscher zur Wärmerückgewinnung wie auch eine Wärmepumpe können vorgesehen sein. Ein Ausführungsbeispiel einer Saatmaistrocknungsanlage ist in den Zeichnungen dargestellt.

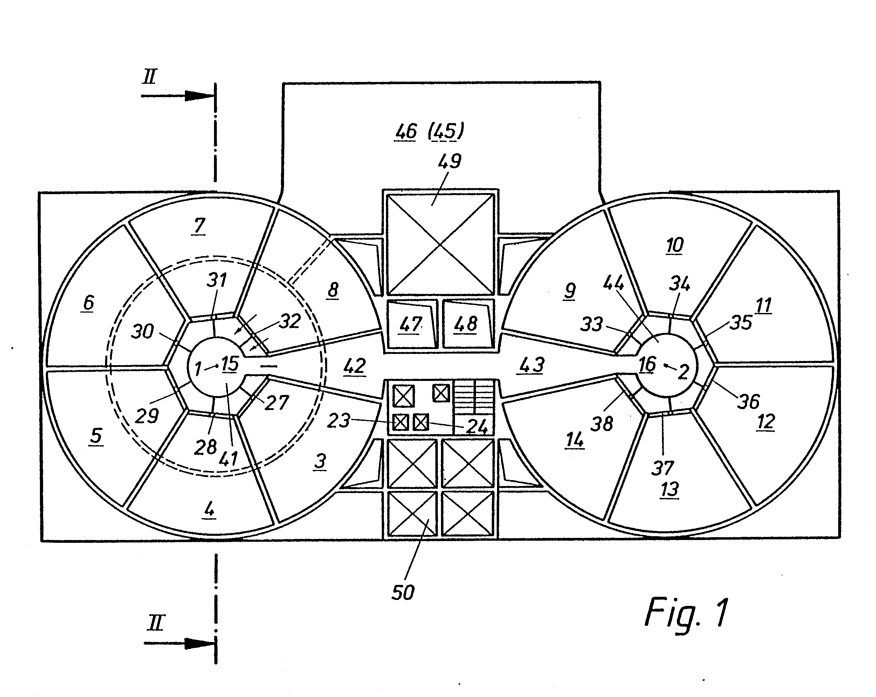

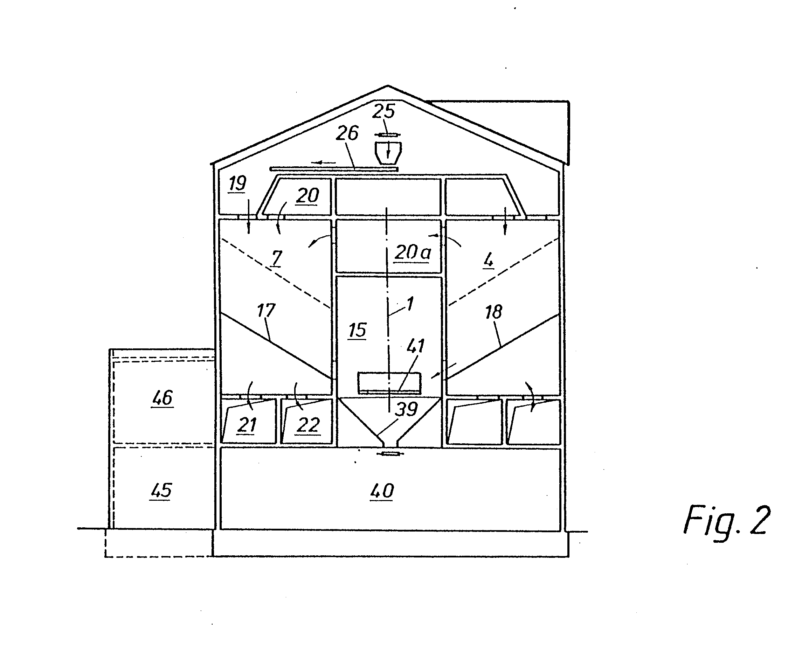

Fig. 1 zeigt einen Längsschnitt in der Ebene der Arbeitsbühne und Fig. 2 einen Querschnitt längs der Linie II-II in Fig. 1. Um jeweils eine zentrale Achse 1, 2 herum sind gemäß Fig. 1 Kammern 3 bis 8 und 9 bis 14 angeordnet. Sie umgeben im Ausführungsbeispiel jeweils einen Schacht 15 bzw. 16. Der Querschnitt nach Fig. 2 läßt erkennen, daß die Kammern 7 und 4 (wie auch alle übrigen Kammern) jeweils einen luftdurchlässigen schrägen Boden 17, 18 aufweisen und daß oben an jeder Kammer 3 bis 8 und 9 bis 14 sowie auch unterhalb jedes luftdurchlässigen Bodens (Siebbodens) Kanäle 20,20a,sowie 21, 22 für Zu- bzw. Umluft (oben) und Zu- bzw. Umluft und Fortluft (unten) angeschlossen sind. Diese Kanäle (Luftführungskanäle) sind als Ringkanäle ausgebildet und schließen die Kammern nach oben und unten ab. Eine Umluftkammer 20a im Schacht 15, 16 ermöglicht die direkte Verbindung der Kammern. Es sind Klappen und Schieber zwischen jeder Kammer 3 bis 8 und 9 bis 14 und jedem Kanal 20,20a, 21, 22 vorgesehen, sodaß warme Zuluft etwa in Serie den Kammern 3 bis 5 nacheinander jeweils unter Temperaturverlust zugeführt werden kann und die Warmluft erst von Kammer 5 abgeführt wird. Zur gleichmäßigen Trocknung wird die Durchströmrichtung in jeder Kammer 3 bis 8 und 9 bis 14 nach einem vorbestimmten Zeitraum umgesteuert. Dazu sind die Klappen wie auch die Schieber über ein zentrales Gerät fernsteuerbar. Die Beschickung der Kammern 3 bis 8 (9 bis 14) erfolgt über die zentralenElevatoren 23, 24 und Förderbänder 25 zu jeweils einem drehbaren Förderband 26, welches jede Kammer 3 bis 8 (9 bis 14) über die Füllklappe 19 erreichen kann.

Zur Entleerung der Kammern 3 bis 8 und 9 bis 14 sind Entleerungsklappen 27 bis 32 sowie 33 bis 38 jeweils an der tiefsten Stelle einer Kammer vorgesehen. Durch die spezielle Anordnung der Kammern ist eine zentrale Entleerung in einen Auffangtrichter 39 (Fig. 2) hinein möglich. Der Trichter 39 schließt den zentralen Schacht nach unten ab. Er mündet in eine unterhalb der Kammern liegende Manipulationshalle 40 ein, in der die Weiterbearbeitung der getrockneten Maiskolben, wie etwa das Rebeln, Sortieren, und dergleichen erfolgt. Eine spezielle Fördereinrichtung zur Zuführung des getrockneten Gutes in die Manipulationshalle ist nicht erforderlich. Wenn ein zentraler Schacht 15 nicht vorgesehen ist, dann liegen die Entleerungsklappen in einem Kreis um die Achse 1 herum direkt auf dem Plafond der Manipulationshalle. Ein Auffangtrichter, der auch als flexible Auffangvorrichtung ausgebildet sein kann, liegt unterhalb der Entleerungsklappe.

Im Ausführungsbeispiel (Fig. 2) ist oberhalb des Auffangtrichters 39 eine Arbeitsbühne 41 vorgesehen. Diese ist über einen radialen Korridor 42 (Fig. 1) von der zentralen Versorgungseinheit aus erreichbar. Ein Korridor 43 führt zu einer Arbeitsbühne 44 im Kammerturm der Achse 2. Der zentrale Versorgungseinheit verfügt über Heizhaus 45 und eine Lüftungszentrale 46, die über Kanäle 47, 48 mit den Lüftungskanälen 20, 21,sowie den entsprechenden Kanälen des Turmes der Achse 2 verbunden sind. Weisters ist ein Abfallsilo 49 sowie auch ein Saatgutsilo 50 vorgesehen, welches in Kammern zur Unterteilung des Saatgutes je nach Herkunft gegliedert ist. Die Trocknungsanlage entspricht in erster Linie der Trocknung von Mais. Sie kann jedoch auch für Saatgut beliebiger Art, insbesondere für Getreide, Hülsenfrüchte, Ölfrüchte oder Soja wie auch für Grassamen verwendet werden.

## Patentansprüche

1. Saatmaistrocknungsanlage mit mehreren Kammern, deren Böden luftdurchlässig und beispielsweise als Siebböden ausgebildet sind, zur Aufnahme von Maiskolben mit einer Heiz- und Lüftungseinrichtung und mit Luftführungskanälen zur Reihen- und bzw. oder Parallelschaltung der Kammern hinsichtlich ihrer Belüftung und Entlüftung, dadurch gekennzeichnet, daß die Kammern (3 bis 8, 9 bis 14) um mindestens eine vertikale Achse (1, 2) herum angeordnet sind und jeweils nächst der Achse (1, 2) eine Entleerungsklappe (27 bis 32, 33 bis 38) zur Entleerung der Kammern ins Zentrum aufweisen, daß im Bereich der Entleerungsklappen (27 bis 32, 33bis 38) ein Auffangtrichter (39) vorgesehen ist, der in einer unterhalb der Kammern (3 bis 8, 9 bis 14) angeordnete Manipulationshalle (40) für die Weiterbearbeitung des getrockneten Gutes ausmündet und daß die Luftführungskanäle (20, 20a,21, 22), insbesondere die Zu- bzw. Umluft-sowie Fortluftkanäle als Ringkanäle oberhalb und unterhalb der Kammern (3 bis 8, 9 bis 14) ausgebildet sind.

2. Saatmaistrocknungsanlage nach Anspruch 1, dadurch gekennzeichnet, daß die Achse (1, 2) das Zentrum eines Schachtes (15, 16) bildet, an den die Kammern (3 bis 8, 9 bis 14) ringsum anschließen, daß die Entleerungsklappen (27 bis 32, 33 bis 38) in den Schacht (15, 16) einmünden und daß der Auffangtrichter (39) am unteren Ende des Schachtes (15, 16) angeordnet ist.

3. Saatmaistrocknungsanlage nach Anspruch 2, dadurch gekennzeichnet, daß im Inneren des vertikalen Schachtes (15, 16) eine Arbeitsbühne (41, 44) vorgesehen und über einen radialen Korridor (42, 43) zwischen den Kammern (3 bis 8, 9 bis 14) zugänglich ist.

4. Saatmaistrocknungsanlage nach den Ansprüchen 2 oder 3, dadurch gekennzeichnet, daß der Schacht (15, 16) an seinem oberen Ende durch eine Umluftkammer (20a) abgeschlossen und gegebenenfalls ein Wärmetauscher zur Wärmerückgewinnung vorgesehen ist.

5. Saatmaistrocknungsanlage nach Anspruch 1 mit mehreren vertikalen Achsen, dadurch gekennzeichnet, daß eine oder mehrere zentrale Heiz- und Lüftungseinrichtungen (45, 46) zwischen den Achsen (1, 2) vorgesehen sind und einen zentralen Baukörper bilden.

0237517

Fig. 1

Fig. 2

0237517